# EUROPEAN PATENT APPLICATION

(11) **EP 2 650 753 A2**
(43) Date of publication of application: **16.10.2013**
(21) Application number: 13001849.2
(22) Date of filing: 10.04.2013
(51) Int. Cl.: G06F 3/01, G06F 3/0481, G06F 1/16, G06F 3/0482, G06F 3/0488, G06F 3/03

(54) **Display apparatus and method of controlling the same**

(30) Priority: 10.04.2012 KR 20120037413
(71) Applicant: LG Electronics, Inc., Seoul, 150-721 (KR)
(72) Inventor: Roh, Taewoo, 153-801 Seoul (KR); Na, Sungchae, 153-801 Seoul (KR); Jeon, Taeyoung, 153-801 Seoul (KR)
(74) Representative: Katérle, Axel

(57) **Abstract**

An image display apparatus and method of controlling the same are disclosed, by which a more convenient 3D (3-dimensional) user interface can be provided to a mobile terminal including a display unit capable of displaying a stereoscopic 3D image. The method includes displaying a first object on a display unit of the image display apparatus, partitioning the first object into a first plurality of layers, determining an inclination of the image display apparatus with respect to a reference and providing a prescribed 3D depth to each layer of the first plurality layers in response to the determined inclination.

## Description

### BACKGROUND OF THE INVENTION

### Field of the Invention

The present invention relates to a display apparatus, and more particularly, to an image display apparatus and method of controlling the same. Although the present invention is suitable for a wide scope of applications, it is particularly suitable for providing a more convenient 3D (3-dimensional) user interface to a mobile terminal including a display unit capable of displaying a stereoscopic 3D image.

### Discussion of the Related Art

Recently, the number of image display devices of various types has increased. Image display devices of terminal types can be classified into mobile/portable terminals and stationary terminals in accordance with a presence or non-presence of movability. The mobile terminals can be further classified into handheld terminals and vehicle mount terminals according to possibility of user's direct portability.

As functions of the terminal type image display device are becoming diversified, the terminal type image display device tends to be implemented as a multimedia player provided with composite functions such as photographing of photos or videos, playback of music or video files, game play, broadcast reception and the like for example.

To support and increase the terminal functions of the image display device, it may be able to consider the improvement of structural parts and/or software parts of the image display device.

Particularly, a terminal type image display device provided with a display unit capable of implementing stereoscopic 3D images by binocular disparity is widely released. In this situation, the demand for an image display apparatus for providing a 3D user interface capable of providing an optimal screen in response to a state of the image display apparatus or a location of a user is increasingly rising.

### SUMMARY OF THE INVENTION

Accordingly, the present invention is directed to a display apparatus and method of controlling the same that substantially obviate one or more problems due to limitations and disadvantages of the related art.

An object of the present invention is to provide a display apparatus and method of controlling the same, by which a more convenient stereoscopic 3D user interface can be provided.

Another object of the present invention is to provide a display apparatus and method of controlling the same, by which a user can be provided with an optimal screen in response to an inclination of the image display apparatus or a location of the user.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an image display apparatus according to one embodiment of the present invention may include a display unit configured to display a stereoscopic 3D image selectively by including a binocular disparity generating means, a first sensing module configured to determine a motion, a second sensing module configured to determine a presence or non-presence of proximity of a pointer and a location of the pointer, a camera, and a controller displaying a specific object on the display unit, the controller partitioning the displayed object into a plurality of layers, the controller giving a prescribed 3D depth to each of a plurality of the layers to correspond to at least one selected from the group consisting of an inclination determined via the first sensing module, the presence or non-presence of the pointer proximity determined via the second sensing module and a location of a user determined using an image of the user taken via the camera.

In another aspect of the present invention, a method of controlling an image display apparatus according to another embodiment of the present invention may include the steps of displaying a first object on a display unit, first partitioning the first object into a plurality of layers, determining an inclination of a mobile terminal, and giving a prescribed 3D depth to each of a plurality of the first partitioned layers in response to the determined inclination.

In a further aspect of the present invention, a method of controlling a mobile terminal according to a further embodiment of the present invention may include the steps of displaying at least one 3D object as a stereoscopic 3D image of a binocular disparity type if a first condition is met, displaying the at least one 3D object as a stereoscopic 2D image if a second condition is met, and displaying the at least one 3D object as a planar image if a third condition is met.

Accordingly, the present invention provides the following effects and/or features.

First of all, the present invention changes 3D depths or arranged configurations of layers including icons or menus in response to an inclination of an image display apparatus sensed by a plurality of sensors or a location of a face-recognized user, thereby providing the user with an optimal view for convenience.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2 is a front perspective diagram of a mobile terminal according to one embodiment of the present invention;

FIG. 3 is a diagram for describing the principle of binocular disparity;

FIG. 4 is a diagram for concept of a sense of distance and 3D depth attributed to binocular disparity;

FIG. 5 is a diagram to describe the principle of a stereoscopic 3D image display method using binocular disparity applicable to embodiments of the present invention;

FIGS. 6A(a) and (b) are diagrams for one example of a distance recognizing method for detecting a pointer location applicable to embodiments of the present invention;

FIGS. 6B(a) and (b) are diagrams for another example of a distance recognizing method for detecting a pointer location applicable to embodiments of the present invention;

FIG. 7 is a flowchart for one example of an operating process for activating a 3D user interface in a mobile terminal according to one embodiment of the present invention;

FIGS. 8A(a), 8A(b), 8B(a), 8B(b), 8C(a), 8C(b), 8D(a) and 8D(b) are diagrams for one example of a process for activating a 3D user interface in response to an inclination change of a mobile terminal according to one embodiment of the present invention;

FIGS. 9(a) and 9(b) are diagrams for one example of a process for operating a 3D user interface in response to a user's view change of a pointer in a mobile terminal according to one embodiment of the present invention;

FIGS. 10(a), 10(b), 10(c) and 10(d) are diagrams for one example of a process for operating a 3D user interface in response to a proximity of a pointer in a mobile terminal according to one embodiment of the present invention;

FIGS. 11(a), 11(b) and 11(c) are diagrams for one example of a process for operating a 3D user interface in response to a contact touch with a pointer in a mobile terminal according to one embodiment of the present invention;

FIGS. 12(a), 12(b) and 12(c) are diagrams for one example of a process for operating a 3D user interface after a selection of a specific layer in a mobile terminal according to one embodiment of the present invention;

FIGS. 13(a), 13(b) and 13(c) are diagrams for one example of a process for operating a 3D user interface in response to an event occurrence in a mobile terminal according to one embodiment of the present invention;

FIGS. 14A(a), 14A(b), 14A(c), 14B(a), 14B(b) and 14B(c) are diagrams of display configurations for one example of a process for changing a display form of an object in accordance with a user's view in a mobile terminal according to another embodiment of the present invention;

FIGS. 15A(a), 15A(b), 15B(a) and FIG. 15B(b) are diagrams of display configurations for one example of a method of changing a display form of a prescribed object in accordance with a touch point according to another embodiment of the present invention; and

FIGS. 16(a), 16(b), 16(c) and 16(d) are diagrams of display configuration for one example of a method of changing a display form of a home screen page in accordance with a touch point according to another embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are often used for elements in order to facilitate discussion of the disclosure. Therefore, significant meanings or roles are not given to the suffixes themselves and it is understood that the 'module', 'unit' and 'part' can be used together or interchangeably.

In the following detailed description, it is assumed that an image display device is a terminal. Various types of terminals may be implemented using the various techniques discussed herein. Examples of such terminals include mobile as well as stationary terminals, such as mobile phones, user equipment, smart phones, DTV, computers, digital broadcast terminals, personal digital assistants, portable multimedia players (PMPs), navigators, and the like. By way of non-limiting example only, further description will be with regard to a mobile terminal 100, and such teachings may apply equally to other types of terminals.

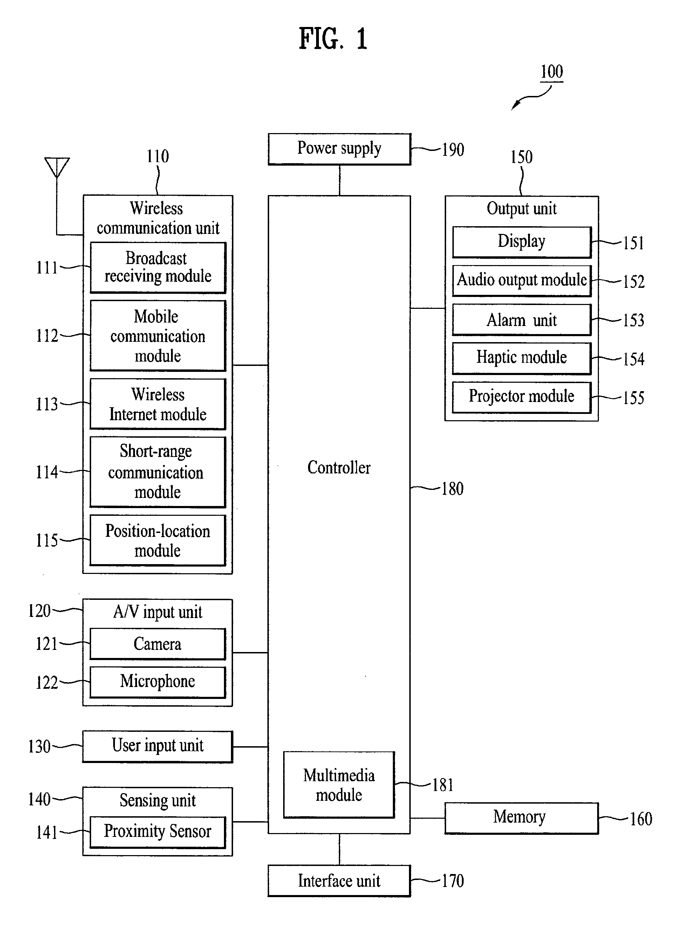

FIG. 1 is a block diagram of a mobile terminal 100 in accordance with an embodiment of the present invention. FIG. 1 shows the mobile terminal 100 having a wireless communication unit 110, an A/V (audio/video) input unit 120, a user input unit 130, a sensing unit 140, an output unit 150, a memory 160, an interface unit 170, a controller 180, a power supply unit 190, among other components. Mobile terminal 100 is shown having various components, but it is understood that implementing all of the illustrated components is not a requirement as greater or fewer components may alternatively be implemented.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115, and the like.

The broadcast receiving module 111 receives a broadcast signal and/or broadcast associated information from an external broadcast managing server via a broadcast channel. The broadcast channel may include a satellite channel and a terrestrial channel. The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. This broadcast associated information can also be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured to be suitable for other broadcasting systems as well as the above-identified digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceiving, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), LTE (Long Term Evolution) and the like.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring still to FIG. 1, the audio/video (A/V) input unit 120 is shown configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Typically, the processed image frames can be displayed on the display 151.

The image frames processed by the camera 121 can be stored in the memory 160 or can be externally transmitted via the wireless communication unit 110. Optionally, two or more cameras 121 can be provided to the mobile terminal 100 according to the environment in which the terminal used to according to user needs.

The microphone 122 receives an external audio signal while the portable device is in a particular mode, such as phone call mode, recording mode and voice recognition mode. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, and the like.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. If desired, the sensing unit 140 can include a proximity sensor 141.

The output unit 150 generates outputs relevant to the senses of sight, hearing, touch and the like. In some cases, the output unit 150 includes the display 151, an audio output module 152, an alarm unit 153, a haptic module 154, a projector module 155, and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In the case where the display 151 and a sensor for detecting a touch action (hereinafter also referred to a 'touch sensor') configures a mutual layer structure (hereinafter also referred to a 'touchscreen'), the user can use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

With continued reference to FIG. 1, a proximity sensor (not shown in the drawing) can be provided to an internal area of the mobile terminal 100 enclosed by the touchscreen or proximate to the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one or more of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor, and the like. When the touchscreen includes the electrostatic capacity proximity sensor, it may also be configured to detect the proximity of a pointer using a variation of electric field according to the proximity of the pointer. In this scenario, the touchscreen (touch sensor) can be classified as a proximity sensor.

In the following description, for clarity, an action that a pointer approaches without contacting with the touchscreen to be recognized as located on the touchscreen is referred to as 'proximity touch' while an action that a pointer actually touches the touchscreen may be referred to as a 'contact touch'. The meaning of the position on the touchscreen proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source (not shown in the drawing) generating light (e.g., laser) for projecting an image externally, an image producing element (not shown in the drawing) for producing an image to output externally using the light generated from the light source, and a lens (not shown in the drawing) for enlarging the image for output externally at predetermined focus distance. The projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. It is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identity Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such feature may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

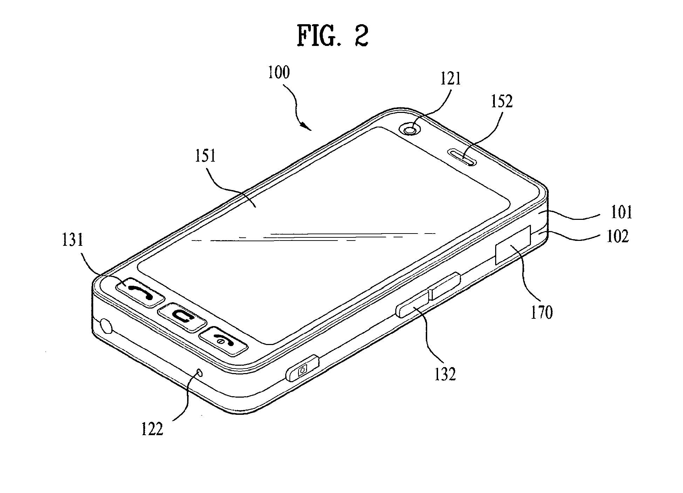

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 170 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

Implementation of Stereoscopic 3D images

In the following description, a method of displaying a 3D image in a mobile terminal applicable to embodiments of the present invention and a display unit configuration for the same are explained.

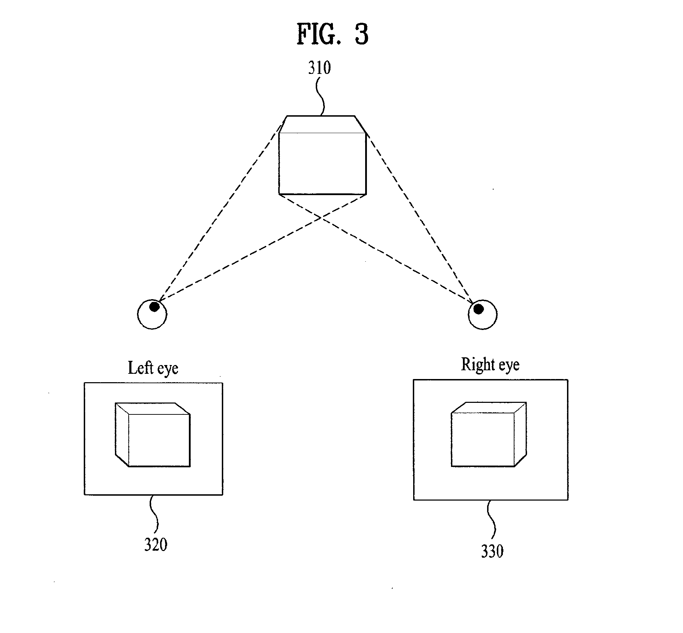

One of schemes for implementing a 3D image is a stereoscopic scheme of providing different image to both eyes, respectively, which uses the principle that a user can sense a stereoscopic effect in looking at an object with human eyes. In particular, human eyes are configured to see different planar images in looking at the same object due to a distance between both eyes. These different images are forwarded to a human brain via retinas. The human brain is able to sense depth and reality of a 3D image by combining the different images together. Therefore, the binocular disparity attributed to the distance between both of the eyes enables the user to sense the stereoscopic effect despite that there is an individual difference of the binocular disparity more or less. Therefore, the binocular disparity becomes the most important factor of the second category. The binocular disparity is explained in detail with reference to FIG. 3 as follows.

FIG. 3 is a diagram for explaining the principle of binocular disparity.

Referring to FIG. 3, assume a situation that a hexahedron 310 is positioned as a subject in front below an eye's height to be seen through human eyes. In this case, a left eye is able to see a left eye planar image 320 revealing three facets including a top side, a front side and a left lateral side of the hexahedron 310 only. And, a right eye is able to see a right eye planar image 330 revealing three facets including the top side, the front side and a right lateral side of the hexahedron 310 only.

Even if a real thing is not actually positioned in front of both eyes of a user, if the left eye planar image 320 and the right eye planar image 330 are set to arrive at the left eye and the right eye, respectively, a user is able to substantially sense the hexahedron 310 as if actually looking at the hexahedron 310.

Thus, in order to implement the 3D image belonging to the second category in the mobile terminal 100, images of the same object should arrive at both eyes in a manner of being discriminated from each other for the left and right eye images of the same object with a predetermined parallax.

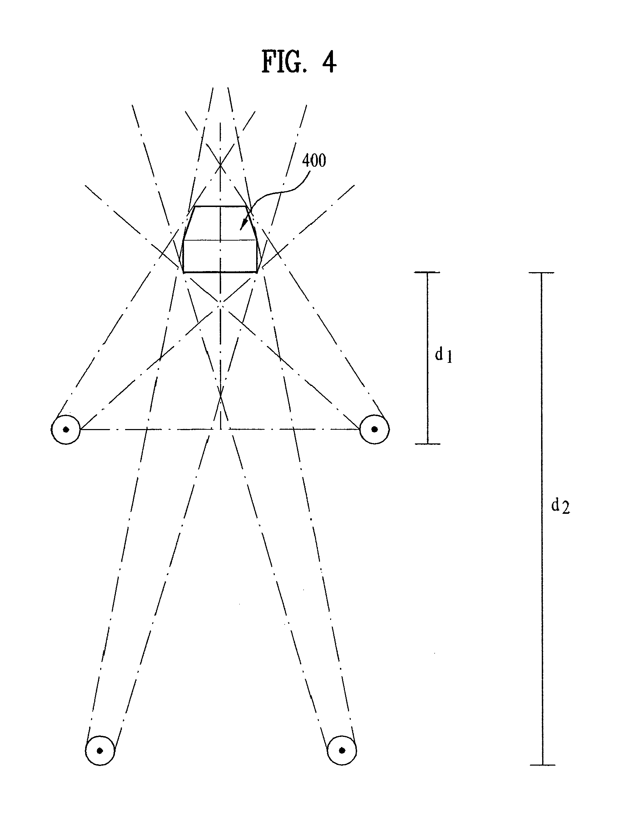

In the following description, 3D depth attributed to the binocular disparity is explained with reference to FIG. 4.

FIG. 4 is a diagram for concept of a sense of distance and 3D depth attributed to binocular disparity.

Referring to FIG. 4, a lateral side ratio of an image entering each eye in view of a hexahedron 400 in a distance d1 through both eyes is relatively higher than that in a distance d2, whereby a difference between images seen through both eyes increases. Moreover, an extent of a stereoscopic effect sensed by a user in view of the hexahedron 400 in the distance d1 can become higher than that in view of the hexahedron 400 in the distance d2. In particular, when a thing is seen through both eyes of a user, a closer subject gives a greater stereoscopic effect, whereas a farther subject gives a smaller stereoscopic effect.

Such a difference in stereoscopic effect can be digitized into a 3D depth or a 3D level. In the following description, a high stereoscopic effect of a thing situated closer shall be represented as a low 3D depth and a low 3D level. And, a low stereoscopic effect of a thing situated farther shall be represented as a high 3D depth and a high 3D level. As the definition of the 3D depth or level is relatively set, a classification reference for the 3D depth or level and an increasing/decreasing direction of the 3D depth or level is changeable.

In order to discriminate the above-mentioned two categories from each other in this disclosure, a stereoscopic image belonging to the first category shall be named '2D stereoscopic image' and a stereoscopic image belonging to the second category shall be named '3D stereoscopic image' or "perceived 3D image.

Methods of implementing a 3D stereoscopic image are described as follows.

First of all, as mentioned in the following description, in order to implement a 3D stereoscopic image, an image for a right eye and an image for a left eye need to arrive at both eyes in a manner of being discriminated from each other. For this, various methods are explained as follows.

1) Parallax Barrier Scheme

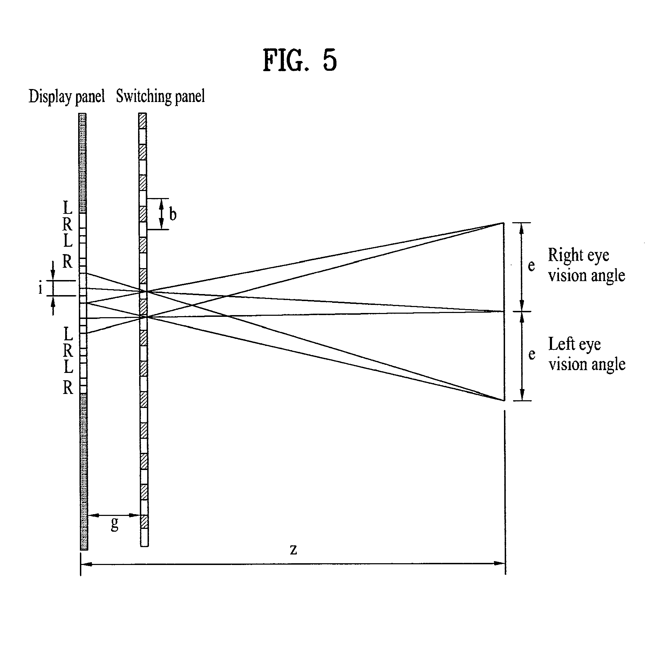

The parallax barrier scheme enables different images arrive at both eyes in a manner of controlling a propagating direction of light by electronically driving a cutoff device provided between a general display and both eyes. This is explained with reference to FIG. 5 as follows.

FIG. 5 is a diagram for describing the principle of a 3D stereoscopic image displaying method using binocular disparity applicable to embodiments of the present invention.

Referring to FIG. 5, in order to display a 3D stereoscopic image, the display unit 151 may include a display panel and a switching panel attached to a top surface of the display panel. The switching panel is electrically controllable and is able to partially cut off or transmit lights to arrive at both eyes. In particular, the display panel may include such a general display device as LCD, LED, AMOLED and the like.

In FIG. 5, 'b' indicates a barrier space of a switching panel, 'g' indicates a gap between a switching panel and a display panel, and 'z' indicates a distance between an eye view position and a display panel. When two images are synthesized by a pixel unit (L, R), as shown in FIG. 5, the switching panel may operate in a manner that a view angle of a right eye and a view angle of a left eye correspond to a pixel included in the right image and a pixel included in the left image, respectively.

In case of attempting to output a 3D stereoscopic image, the switching panel is turned on to separate incident view angles from each other. In case of attempting to output a 2D image, the switching panel is turned off to let the incident view angle pass through. Hence, if the switching panel is turned off, binocular disparity is not separated. The above-configured switching panel facilitates a switching between 2D and 3D, thereby enabling a user to advantageously appreciate a 3D stereoscopic image without wearing polarizing glasses or active-shutter type glasses.

FIG. 5 shows that the parallax barrier works in one axial direction for example, by which the present invention may be non-limited. Alternatively, the present invention may adopt a parallax barrier capable of working in at least two axial directions in accordance with a control signal generated by the controller 180.

2) Lenticular

The lenticular scheme relates to a method of using a lenticular screen provided between a display and both eyes. In particular, a propagating direction of light is refracted via lens on the lenticular screen, whereby different images arrive at both eyes, respectively.

3) Polarized Glasses

According to the polarized glasses scheme, polarizing directions are set orthogonal to each other to provide different images to both eyes, respectively. In case of circular polarization, polarization is performed to have different rotational direction, whereby different images can be provided to both eyes, respectively.

4) Active Shutter

This scheme is a sort of the glasses scheme. In particular, a right eye image and a left eye image are alternately displayed on a display unit with prescribed periodicity. And, user's glasses close its shutter in an opposite direction when an image of a corresponding direction is displayed. Therefore, the image of the corresponding direction can arrive at the eye in the corresponding direction. Namely, while the left eye image is being displayed, a shutter of the right eye is closed to enable the left eye image to arrive at the left eye only. On the contrary, while the right eye image is being displayed, a shutter of the left eye is closed to enable the right eye image to arrive at the right eye only.

In the following description, assume that a mobile terminal according to one embodiment of the present invention is able to provide a user with a 3D stereoscopic image via the display unit 151 by one of the above described methods.

Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

Pointer Location Recognized Method

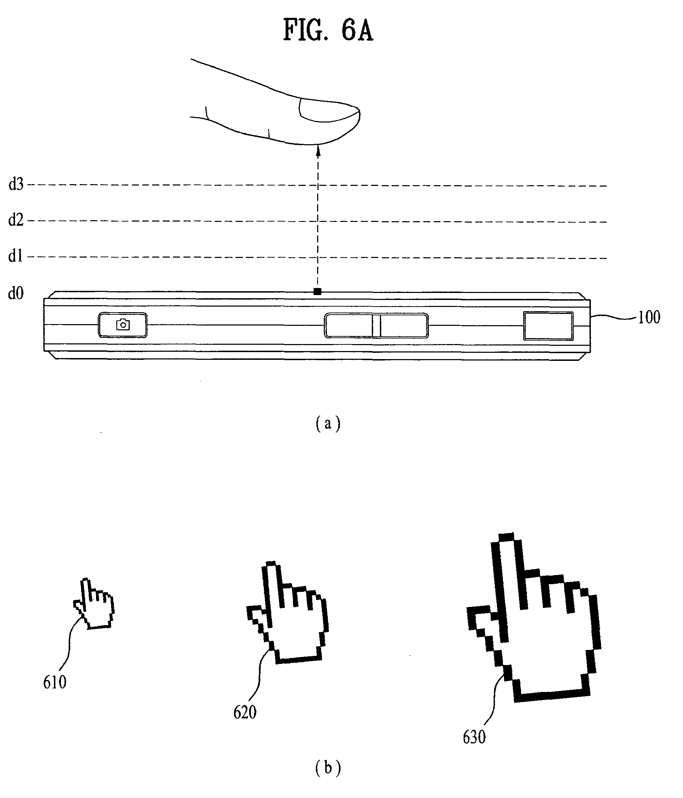

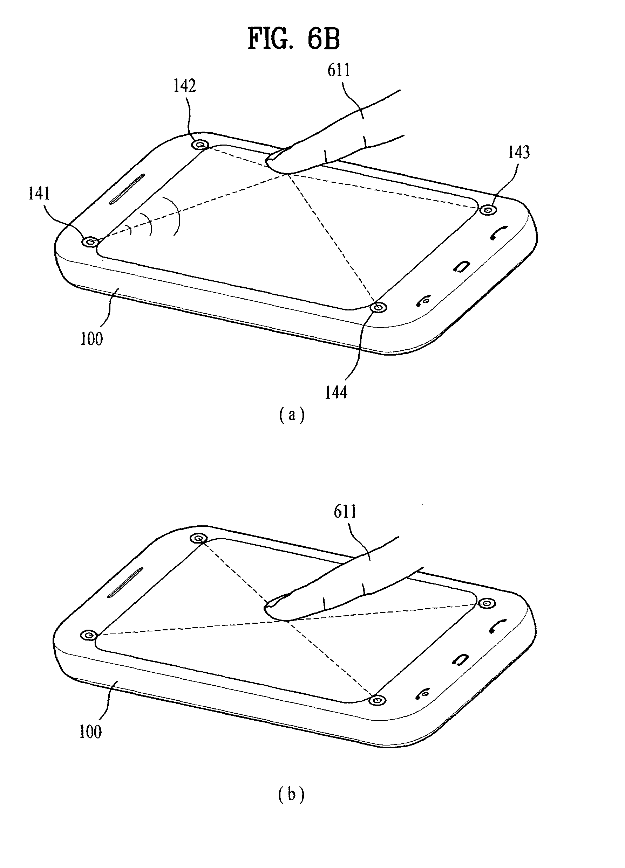

In the following description, methods for detecting a pointer location applicable to embodiments of the present invention are explained with reference to FIG. 6A and FIG. 6B.

First of all, the controller 180 of the mobile terminal according to the present invention obtains a location, a moving trace, an operating pattern and an operating type of such a pointer as a user' hand, a stylus pen and the like using images consecutively taken via the camera 121 and may be then able to recognize the obtained information as a corresponding user command. In doing so, it is able to further enhance a sensing accuracy using a proximity sensor, a distance sensor or a combination thereof instead of using an image singly taken via the camera 121. In particular, it may be able to simultaneously use a plurality of sensors to further enhance the sensing accuracy.

FIG. 6A is a diagram for one example of a distance recognizing method for detecting a pointer location applicable to embodiments of the present invention.

Referring to FIG. 6A, assume that the display unit 151 of the mobile terminal 100 is placed to face upward. And, assume that the camera 121 shown in FIG. 2 is placed to face the same direction of the display unit 151. Referring to FIG. 6A (a), in case that a pointer (e.g., a finger) is posed over the mobile terminal 100, it may be taken via the camera 121. In doing so, if a distance between the pointer and the mobile terminal 100 gradually decreases from a distance d3 to a distance d1 via a distance d2, referring to FIG. 6A (b), the taken image may include a left image 610, a middle image 620 or a right image 630 to increase its size. If a pointer recognition procedure activated using this principle, the controller 180 outputs a visual effect (e.g., a text) to make a request for placing the pointer in a predetermined distance over the display unit to a user. By this method, the controller 180 sequentially obtains the images, each of which includes the pointer located in a different distance (e.g., 2 cm, 5 cm, 10 cm, etc.) from the camera. The controller 180 recognizes a common shape, which is obtained from the corresponding image but differs in size, as the pointer and may be then able to determine a corresponding size in each of the distances.

FIG. 6B is a diagram for another example of a distance recognizing method for detecting a pointer location applicable to embodiments of the present invention.

Referring to FIG. 6B, assume a case that a plurality of proximity sensors 141 to 144 are arranged nearby sides or corners of the mobile terminal 100. As a pointer 611 approaches the mobile terminal 100, the controller 180 obtains information on a distance to the pointer 611 from each of the sensors 141 to 144 and is then able to determine a location of the pointer by such calculation as triangulation and the like. For instance, if the pointer 611 moves in the manner shown in FIG. 6B (a) and FIG. 6B (b), the distances to the pointer, which are determined by the sensors, decrease at the same rate, respectively. Hence, the controller 180 may be able to determine that the distance decreases only without parallel movement toward the mobile terminal 100. Besides, it may be able to determine a location of a pointer by a method including the steps of applying an infrared ray to the pointer from at least one portion of the mobile terminal 100 and sensing a pattern of the infrared ray reflected by the pointer using an infrared ray sensor.

The above-mentioned pointer location/distance measuring methods described with reference to FIG. 6A and FIG. 6B are exemplary, by which the present invention may be non-limited. And, it is apparent to those skilled in the art that any methods of detecting a location of a pointer using sensors are applicable to the present invention.

3D User Interface

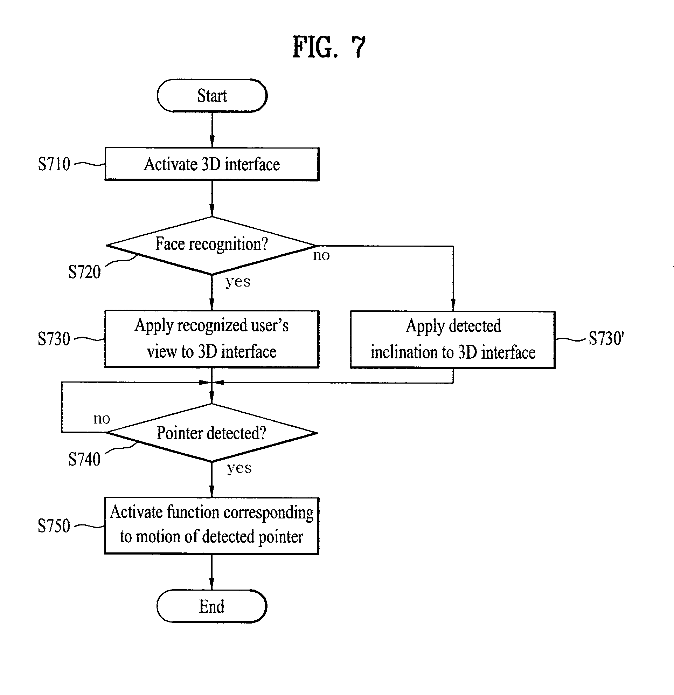

According to one embodiment of the present invention, provided is a 3D user interface configured as follows. First of all, an object displayed on a display unit is partitioned into at least one or more layers in accordance with a state in which a users' view or a mobile terminal is placed. Secondly, at least one of an arranged shape and a 3D depth of each of the layers is changeable. In this case, a method of determining a user's location by face recognition or the like using the camera 121 may apply to the user's view. And, it may be able to determine the mobile terminal placed state using a mobile terminal inclination sensed via the sensing unit 140. In the following description, an operating process for providing a 3D user interface in a mobile terminal according to one embodiment of the present invention is explained with reference to FIG. 7.

FIG. 7 is a flowchart for one example of an operating process for activating a 3D user interface in a mobile terminal according to one embodiment of the present invention.

Referring to FIG. 7, as a prescribed condition is met, a 3D user interface according to the present invention can be activated [S710]. In one of a case that a specific application is activated, a case that an inclination of the mobile terminal changes, a case that an activation command input is applied via the user input unit, a case that a pre-scheduled event occurs, and a case that an external signal (e.g., an incoming call signal, etc.) is inputted, it may be able to determine that the condition for activating the 3D user interface is met. Once the 3D user interface is activated, the controller 180 groups objects currently displayed on the display unit into at least one or more layers, gives a prescribed 3D depth to each of the layers, and changes the arranged configuration of the layers.

Subsequently, the controller 180 may be able to perform face recognition to determine a view in which a user is gazing at the mobile terminal 100 [S720]. The face recognition may be performed in a following manner. First of all, the controller 180 recognizes a user's face part in an image taken via the camera 121 provided to the mobile terminal 100, extracts the face part from the image, and then determines a corresponding location.

In order for each of the layers to be watched at an optimal angle in the user's view determined through the face recognition, the controller 180 may change at least one of the arranged state and the 3D depth of each of the layers [S730]. For instance, the present step may be performed to enable a surface of each of the layers and the user's view to become vertical to each other. Of course, the present step may be performed to change at least one of the arranged state and the 3D depth of each of the layers in accordance with the user's view irrespective of the inclination of the mobile terminal. Alternatively, the present step may be performed in a manner of determining an angle between each of the layers and a ground surface in accordance with the inclination of the mobile terminal and then rotating the corresponding layer along at least one of X-axis, Y-axis and Z-axis to correspond to the user's view.

If the face recognition is not used, the controller 180 may be able to change the arranged state and 3D depth of each of the layers configuring the 3D user interface to correspond to the inclination of the mobile terminal 100 (e.g., the surface of each of the layers becomes vertical to the ground surface) [S730'].

Subsequently, the controller 180 detects a motion of the pointer through the proximity sensor, the camera and/or the touchscreen [S740] and is then able to activate a function corresponding to the detected motion of the pointer [S750].

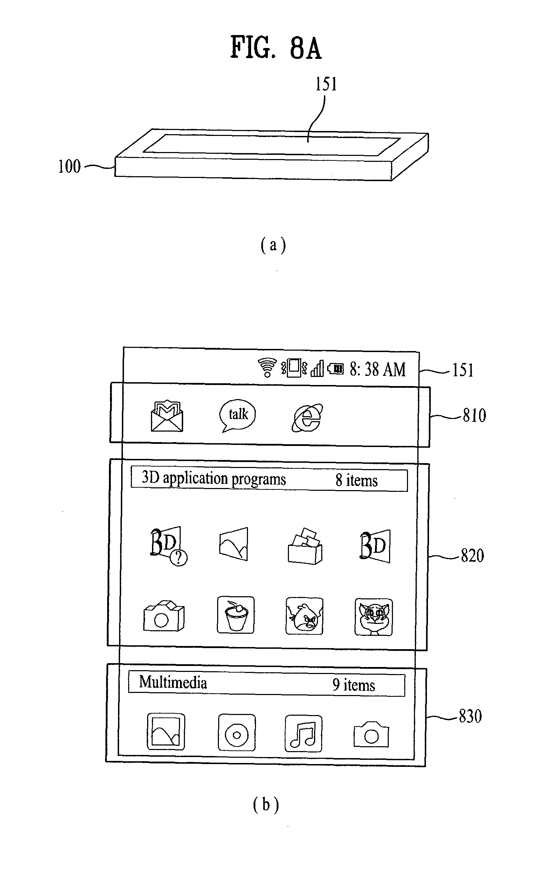

As mentioned in the foregoing description, when the inclination of the mobile terminal 100 is changed, the controller 180 is able to activate the 3D user interface. In the following description, when a user lifts up the mobile terminal 100 placed on a plane, a process for activating a 3D user interface is explained with reference to FIGS. 8A to 8D.

FIGS. 8A to 8D are diagrams for one example of a process for activating a 3D user interface in response to an inclination change of a mobile terminal according to one embodiment of the present invention.

Referring to FIGS. 8A to 8D, assume that the face recognition is not applied. When the mobile terminal 100 is placed as shown in FIG. 8A (a), assume a case that a list of applications is displayed as icons on the touchscreen 151 (FIG. 8A (b)). In particular, assume that an object displayed on the touchscreen 151 shown in FIG. 8A includes a main menu in which a plurality icons are arranged in a prescribed form.

In this case, a plurality of the icons is grouped into a plurality of groups 810, 820 and 830. In particular, each of a plurality of the groups 810, 820 and 830 may be configured by a user randomly or by the controller 180 in accordance with a prescribed reference. Each of the groups 810, 820 and 830 may be considered as a single layer. In the case shown in FIG. 8A, all of the layers may be arranged adjacent to each other on the same plane in a manner that a 3D depth of '0' is given to each of the layers (i.e., all of the layers are displayed on a surface of the touchscreen).

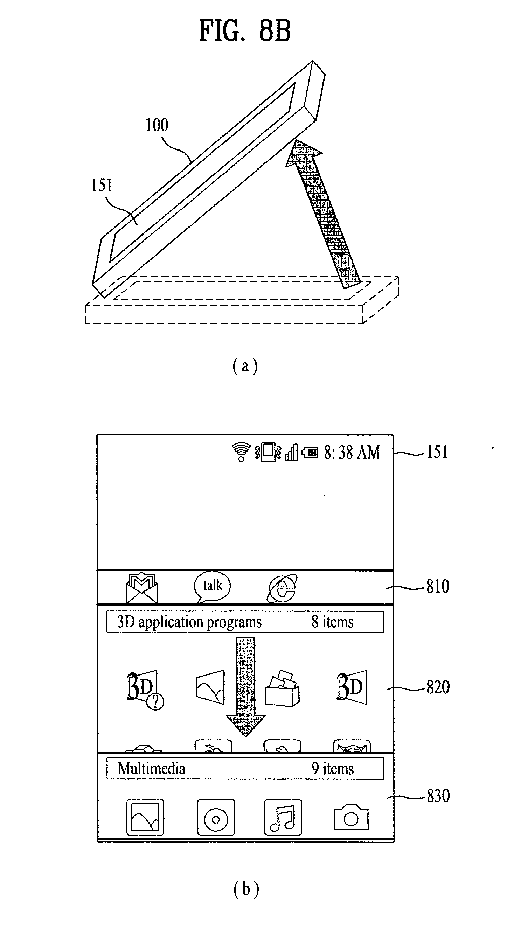

If a user lifts up the mobile terminal 100 in the situation shown in FIG. 8A (FIG. 8B (a)), a visual effect may be displayed on the touchscreen 151 as in a manner that the layers 810, 820 and 830 corresponding to the respective groups overlap with each other in part as if falling down by gravity.

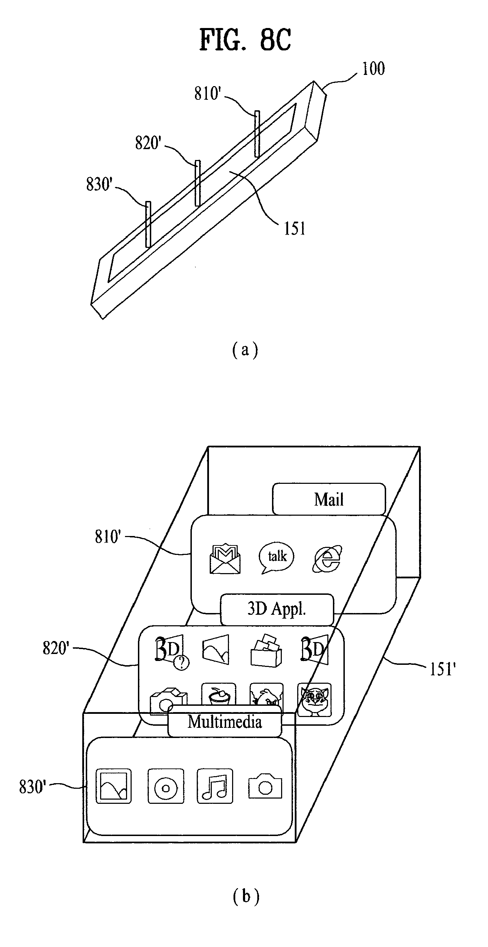

In continuation with the layer falling-down visual effect, the controller 180 may activate the 3D user interface by a method of changing the arranged state by giving a 3D depth to each of the layers. A corresponding example is shown in FIG. 8C. Particularly, FIG. 8C shows a case that a 3D depth is given to each layer to become vertical to a ground surface in a manner of being located at the substantially same location of a previous location before the activation of the 3D user interface. In more particular, FIG. 8C (a) is a perspective diagram of the mobile terminal, in which the 3D depth given layers 810', 820' and 830' stand upright to become vertical with respect to the ground surface. Referring to FIG. 8C (a), each of the 3D depth given layers looks like being projected from a surface of the touchscreen, which is to help the understanding of the 3D effect. In particular, although each of the layers 810', 820' and 830' is displayed actually displayed on the touchscreen surface, a user may experience such an effect as if the layers 810', 820' and 830' stand upright in a virtual space 151' that can be represented by the touchscreen 151.

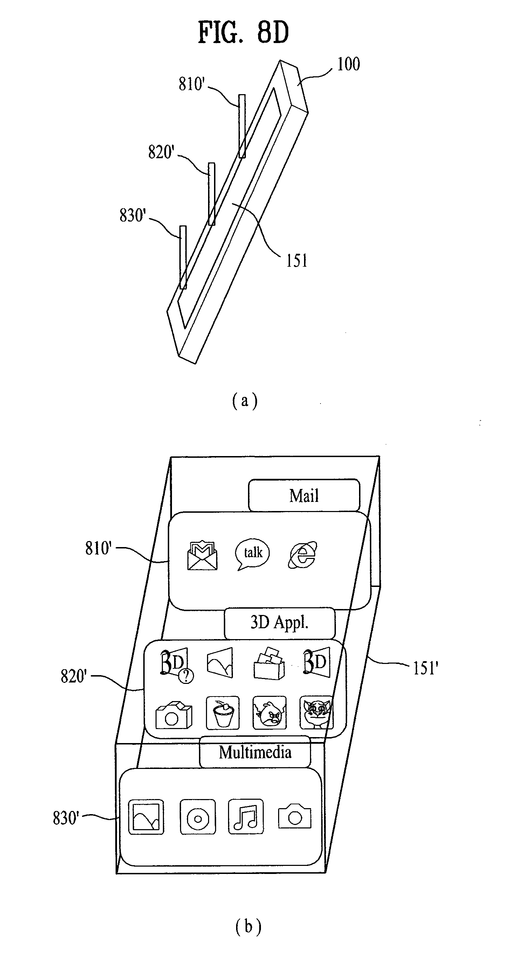

In doing so, referring to FIG. 8D, if the inclination of the mobile terminal 100 becomes closer to vertical, the controller 180 may change the arranged state in a manner that each of the layers 810', 820' and 830' remains standing vertical to the ground surface.

Although FIGS. 8A to 8D assume the case that the user lifts up the mobile terminal, it may be able to activate the 3D user interface according to the present invention if the user puts down the lifted mobile terminal to a flat spot.

For clarity, icons, menus and/or contents contained in each layer may be omitted from the following drawings in part.

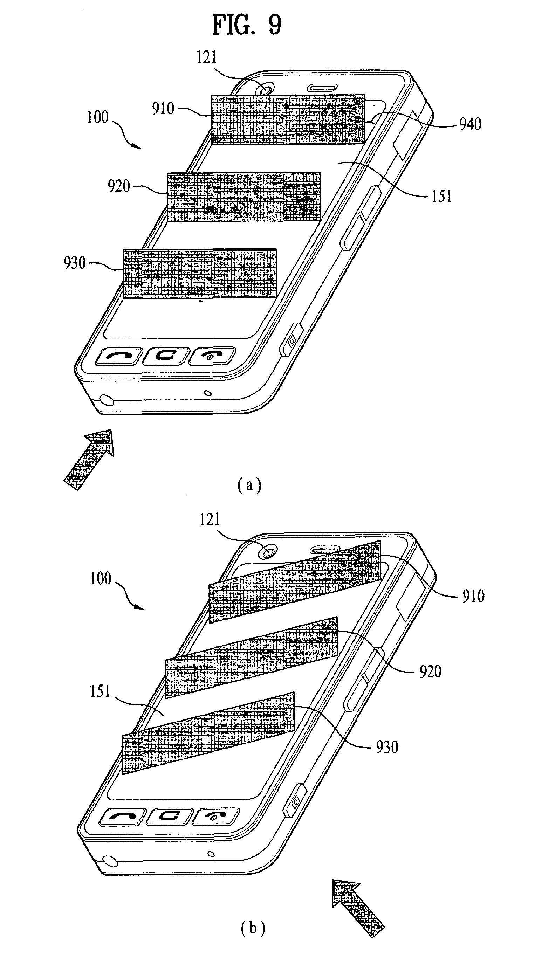

A case of applying the face recognition is described with reference to FIG. 9 as follows.

FIG. 9 is a diagram for one example of a process for operating a 3D user interface in response to a user's view change of a pointer in a mobile terminal according to one embodiment of the present invention. In FIG. 9, assume a case that the 3D user interface is already activated by one of the methods mentioned in the foregoing description.

Referring to FIG. 9 (a), as a result of the face recognition via the camera 121, in case that a user's view is located in front (i.e., arrow direction), layers 910, 920 and 930 may be arranged in a manner that surfaces of the layers 910, 920 and 930 face toward the user's view. In doing so, an angle 940 formed between a touchscreen surface and each of the layers arranged in a virtual space may be determined depending on a height of the user's view that is determined as a result of the face recognition. Alternatively, the angle 940 may be determined depending on the inclination of the mobile terminal shown in FIG. 8.

In case that the user moves to the right, referring to FIG. 9 (b), the controller 180 detects a movement of the user's view through the face recognition and may be then able to control the surface of each of the layers to be rotated toward the detected user's view.

By this method, the user is able to check the layers conveniently irrespective of the direction in which the mobile terminal is placed.

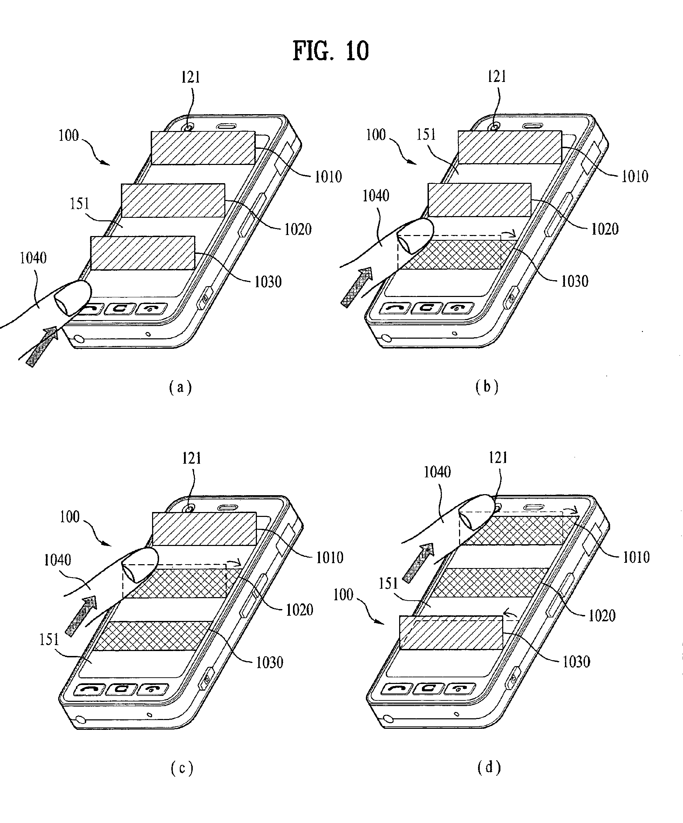

In the following description, a visual feedback in accordance with a detection of a pointer is explained in detail with reference to FIG. 10.

FIG. 10 is a diagram for one example of a process for operating a 3D user interface in response to a proximity of a pointer in a mobile terminal according to one embodiment of the present invention. In FIG. 10, assume that a 3D user interface is already activated by one of the methods mentioned in the foregoing description. And, assume that an object displayed prior to the activation is partitioned into 3 layers 1010, 1020 and 1030. Moreover, assume that FIGS. 10 (a) to 10 (d) shows the steps performed in order.

Referring to FIG. 10 (a), as a 3D user interface according to the present invention is activated, an arranged state of each of a plurality of layers 1010, 1020 and 1030 is changed to correspond to an inclination and/or a result of face recognition. In this state, a pointer 1040 approaches the bottom layer 1030.

Referring to FIG. 10 (b), if the controller 180 detects that a location of the pointer 1040 approaches the bottom layer 1030 by at least one of the methods mentioned in the description with reference to FIG. 6A and FIG. 6B, the controller 180 sequentially removes the 3D depth given to the bottom layer 1030. Hence, in the user's view, it may bring an effect that the upright bottom layer 1030 contacts with the pointer 1040 and then lies down.

Subsequently, referring to FIG. 10 (c), if the pointer 1040 approaches the middle layer 1020, the 3D depth given to the middle layer 1020 may be removed as well. If the pointer 1040 approaches the top layer 1010, referring to FIG. 10 (d), the 3D depth given to the top layer 1010 may be removed as well. In doing so, if a distance between the bottom layer 1030 and the pointer 1040 becomes equal to or greater than a predetermined distance, the controller 180 may be able to sequentially give the 3D depth having been removed from the bottom layer 1030. Hence, in user's view, a user may experience a following effect. First of all, the bottom layer 1030 is fallen by the pointer. Secondly, as the pointer gets distant from the bottom layer, the bottom layer stands upright again.

In the above description, the pointer is shifted in order of FIGS. 10 (a) to 10 (d). Alternatively, the pointer may be shifted in order of FIGS. 10 (d) to 10 (a) as well.

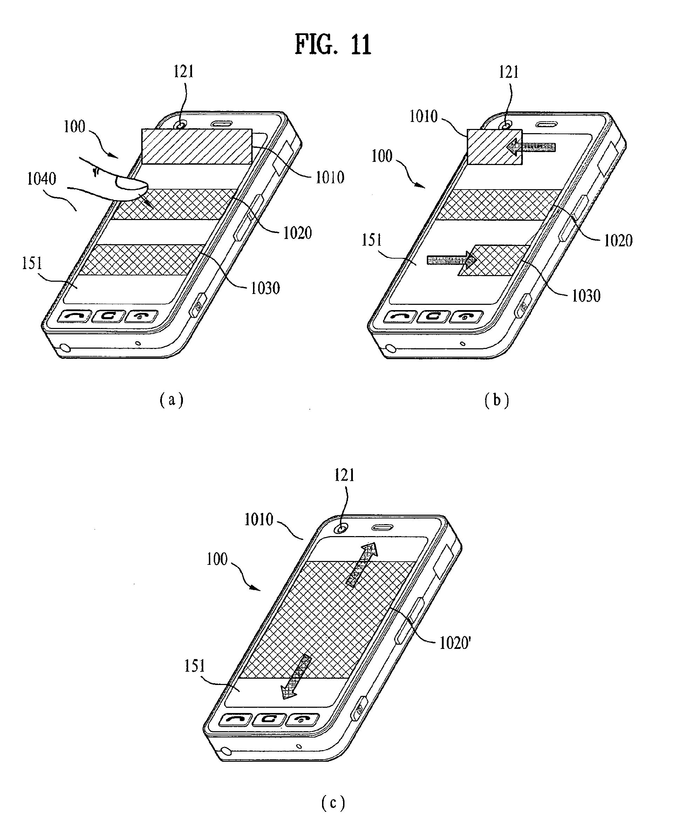

In the following description, a process for selecting a layer by a contact touch with a pointer is explained with reference to FIG. 11.

FIG. 11 is a diagram for one example of a process for operating a 3D user interface in response to a contact touch with a pointer in a mobile terminal according to one embodiment of the present invention. Assume that the process shown in FIG. 11 follows the step shown in FIG. 10 (c) under the same condition of FIG. 10.

Referring to FIG. 11 (a), while the pointer 1040 comes close to the middle layer 1020, a user may be able to apply a contact touch with the pointer 1040 to a region, on which the middle layer 1020 is displayed, on the touchscreen 151 in order to select the middle layer 1020.

Hence, referring to FIG. 11 (b), the rest of the layers except the selected middle layer 1020 may disappear from the touchscreen 151 in a manner of moving to the corresponding sides of the touchscreen 151. In particular, each of the disappearing layers 1010 and 1030 may move by maintaining the 3D depth given prior to the middle layer selection. And, each of the disappearing layers 1010 and 1030 may move in different direction.

Referring to FIG. 11 (c), after the unselected layers 1010 and 1030 have disappeared, the selected middle layer 1020' may extend to a full screen.

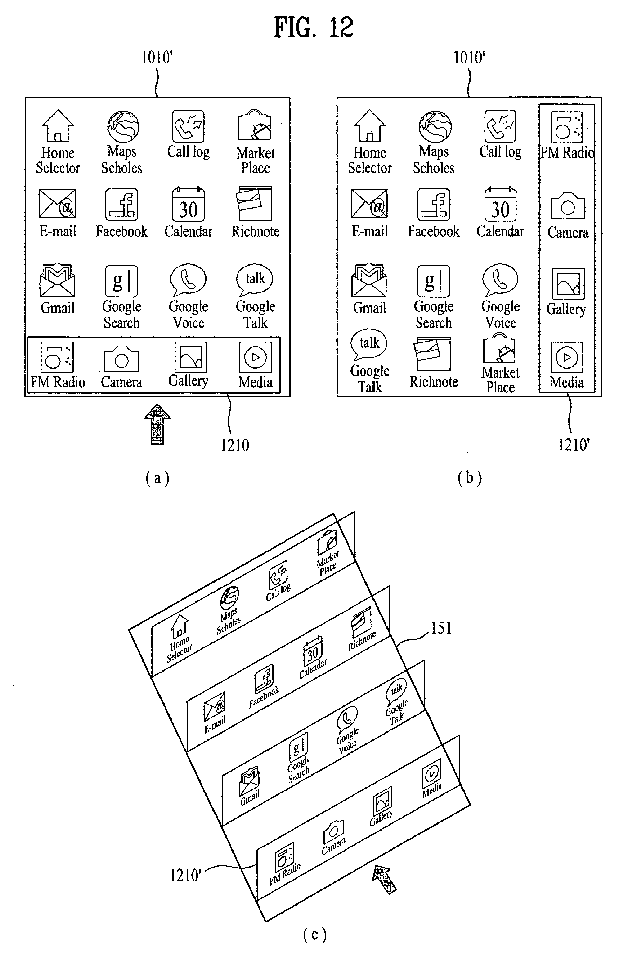

In the following description, a process for the selected layer to extend to the full screen is explained in detail with reference to FIG. 12.

FIG. 12 is a diagram for one example of a process for operating a 3D user interface after a selection of a specific layer in a mobile terminal according to one embodiment of the present invention. Assume that the process shown in FIG. 12 follows the step shown in FIG. 11 (c).

Referring to FIG. 12 (a), a selected layer 1210' is displayed as a full screen and a 3D depth is not given to the selected layer 1210'. In case that the selected layer is displayed as the full screen, since a surface area of the selected layer is increased greater than that of the corresponding layer previously displayed together with other layers shown in FIG. 11 (a), it may be able to display contents and/or icons unable to be displayed due to the limited surface area shown in FIG. 11 (a). Moreover, face recognition can be performed in the present process and the controller 180 may control the frequently used icons 1210 to be arranged in the direction closer to a recognized user's location. Hence, if a user's view is changed into a right side from a front side, referring to FIG. 12 (b), the frequently used icons can be arranged in a right column 1210'.

Meanwhile, the icons included in the selected layer may be divided into a plurality of sublayers and a 3D depth can be given to each of the sublayers (FIG. 12 (c)). In this case, a 3D depth or arranged direction of each of the sublayers can be changed to correspond to a user's view (e.g., an arrow).

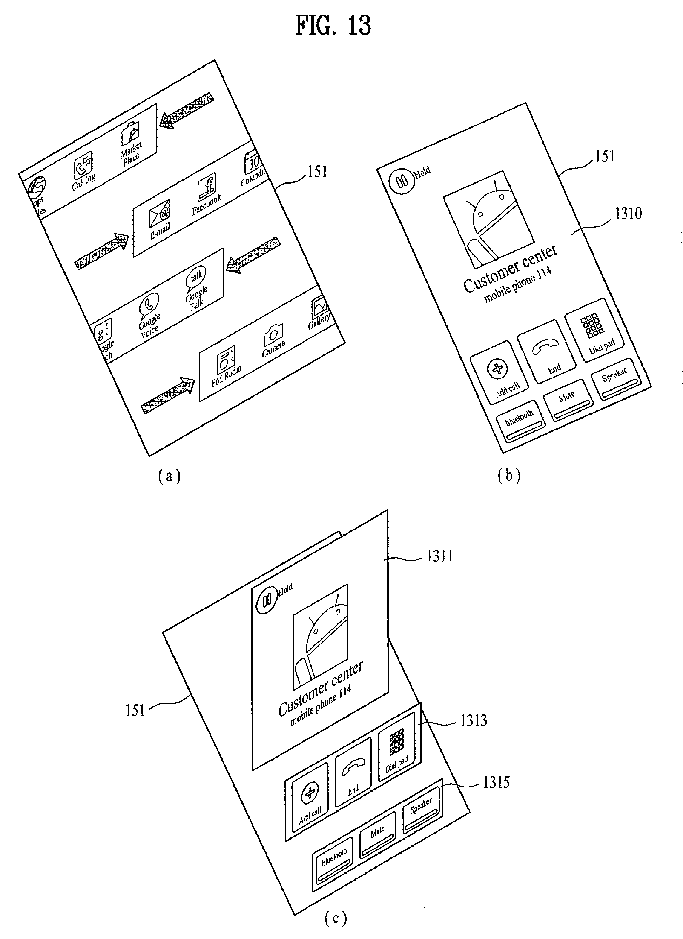

In the following description, while a 3D user interface is active, if an event occurs, a corresponding operation of a mobile terminal is explained with reference to FIG. 13.

FIG. 13 is a diagram for one example of a process for operating a 3D user interface in response to an event occurrence in a mobile terminal according to one embodiment of the present invention. The process shown in FIG. 13 may follow the step shown in FIG. 12 (c) or the step shown in FIG. 9 (a). And, assume that an event includes an incoming call signal.

Referring to FIG. 13, while a 3D user interface according to the present invention is active, if there is an incoming call, the controller 180 may control layers, which are displayed in a manner similar to that shown in FIG. 11 (b), to disappear in side directions (FIG. 13 (a)). After the layers have disappeared or as soon as the layers disappear, an incoming call menu 1310 may be displayed on the touchscreen 151 (FIG. 13 (b)). Subsequently, the incoming call menu is divided into a plurality of layers 1311, 1313 and 1315 and an arranged state and/or 3D depth of each of the layers 1311, 1313 and 1315 may be changeable (FIG. 13 (c)). In this case, as mentioned in the foregoing description, the arranged state and/or 3D depth of each of the layers 1311, 1313 and 1315 may be changed in response to an inclination of the mobile terminal or a location of a user detected by the face recognition.

In FIG. 13, the occurring event is assumed as the caption of the call signal, by which the present invention may be non-limited. And, the present invention may be applicable to various events. For instance, the various events may include a reception of SMS, MMS, email and the like, an expiration of a preset alarm hour, and the like.

Meanwhile, according to the above-described embodiments, the 3D user interface includes the stereoscopic 3D image of the binocular disparity type. Yet, if user's eyes deviate over a predetermined angle from a front side of the display unit, a stereoscopic 3D image may not be implemented depending on an implementation type of the stereoscopic 3D image. In this case, the 3D user interface according to the present invention may be implemented into a graphic 3D image (i.e., right and left eye images are identical to each other).

Multi-Step Change of Image Display Form According to Condition

According to another embodiment of the present invention, a display object displayed form may be changed depending on whether a preset condition is met. In this case, the displayed form conceptionally includes a planar 2D image, a stereoscopic 2D image or a stereoscopic 3D image by being discriminated in accordance with a 3D effect given to a display object. Hence, it is preferable that a 3D depth value is given to at least one portion of a display object according to the present invention to enable the change of the above-mentioned display form.

For example of the object display form change according to a condition, if a first condition is met, a display object is displayed as a stereoscopic 3D image. In such a state, if a second condition is met, the corresponding object may be displayed as a stereoscopic 2D image. While the second condition is met, if a third condition is met, the corresponding object may be displayed as a planar 2D image. Of course, the display object may be displayed in order reverse to 'first condition → second condition → third condition'. In particular, while an object is displayed as a planar 3D image on the condition that the second condition is met, if the first condition is met or both of the second condition and the third condition are not met, the corresponding object may be displayed as a stereoscopic 3D image.

For example, the first or second condition may include a user's view range detected via a camera. For example, the third condition may include a view range and/or an arrangement relation between a plurality of objects. In particular, if a user's view lies within a first view range, the first condition is met to enable display object(s) to be displayed as a stereoscopic 3D image. If a user's view does not exceed a second view range despite deviating from the first view range, the second condition is met to enable the corresponding object to be displayed as a stereoscopic 2D image. If a user's view is output of the second view range or an arranged state of display objects meets a specific condition despite existing within the second view range (e.g., one of the display objects blocks at least one portion of another object), the third condition is met to enable the corresponding object to be displayed as a planar image from a stereoscopic 2D image.

In this case, the first view range preferably includes a range for providing a user with an optimal stereoscopic 3D image in various types for implementing a stereoscopic 3D image. For instance, as mentioned in the foregoing description, in case of the parallax barrier type, a left eye image is set to arrive at a left eye of a user and a right eye image is set to arrive at a right eye of the user, depending on whether a switching barrier is active. In doing so, since a maximum operation range of the switching barrier generally does not deviate from a predetermined area, if a user's view deviates from a range established on the switching barrier design, each of the right and left eye images may arrive at an unintended opposite eye. In this case, the user is unable to see a clear stereoscopic 3D image. Therefore, the first view range may include the range enough for a stereoscopic 3D image implementing means to enable a right eye image and a left eye image to precisely arrive at corresponding eyes, respectively. Thus, if the user's view deviates from the first range, it is difficult to implement the stereoscopic 3D image precisely. If the display type of the object is changed into the stereoscopic 2D image, a user can be aware that his view has deviated from an optimal range. Moreover, although the view deviates from the optimal view range, if the display type is changed into the stereoscopic 2D image type only while the object is being displayed at the timing point of the deviation, the user may keep watching the same object via the display unit 151.

In the following description, a method of switching between a stereoscopic 3D image, a stereoscopic 2D image and a planar image for a same objet is explained. According to the present embodiment, two kinds of the switching methods are proposed.

According to a first switching method, a stereoscopic 3D image, a stereoscopic 2D image and a planar image are prepared in advance for a specific object. Subsequently, the images are switched to each other depending on whether a prescribed condition is met.

According to a second switching method, an object is 3-dimensioally configured in a virtual space by such 3D APPI (application program programming interface) as OpenGL, direct X and the like. Subsequently, an image resulting from looking at the configured object in different views according to a condition is outputted.

For instance, when an object of a hexahedral structure (i.e., a cube) is arranged in a manner that a first facet of the object faces a front side, if a first condition (i.e., a determined user's view lies within a first view range), is met, the controller 180 creates a source image of the corresponding object in a manner of creating one image, which is seen in the view capable of watching both of the first facet and a left side of the first facet, as a left eye image and another, which is seen in the view capable of watching both of the first facet and a right side of the first facet, as a right eye image. If a user's view is changed within a range not exceeding the first vie range, the controller 180 may be able to change the view of creating the left eye image and the view of creating the right eye image in response to the changed user's view. If the user's view exceeds the first view range, i.e., if a second condition is met, the controller 180 may be able to create a stereoscopic 2D image using one of the left eye image creating view and the right eye image creating view only or may be able to create a stereoscopic 2D image in view of watching the corresponding object from the viewpoint at an intermediate location between the two views. Moreover, if a third condition is met, the controller 180 may be able to display a planar image by a method of outputting an image of the first facet only.

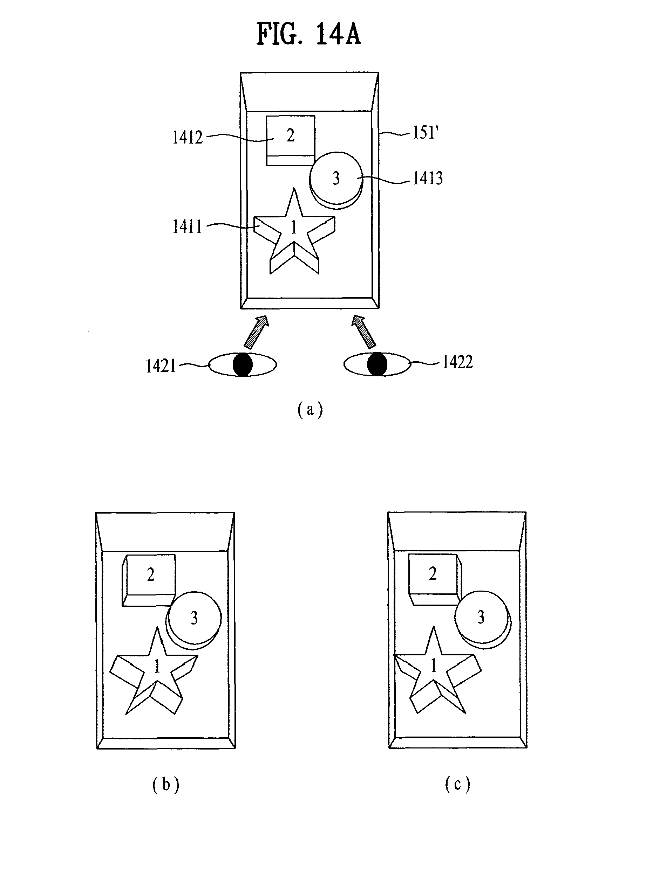

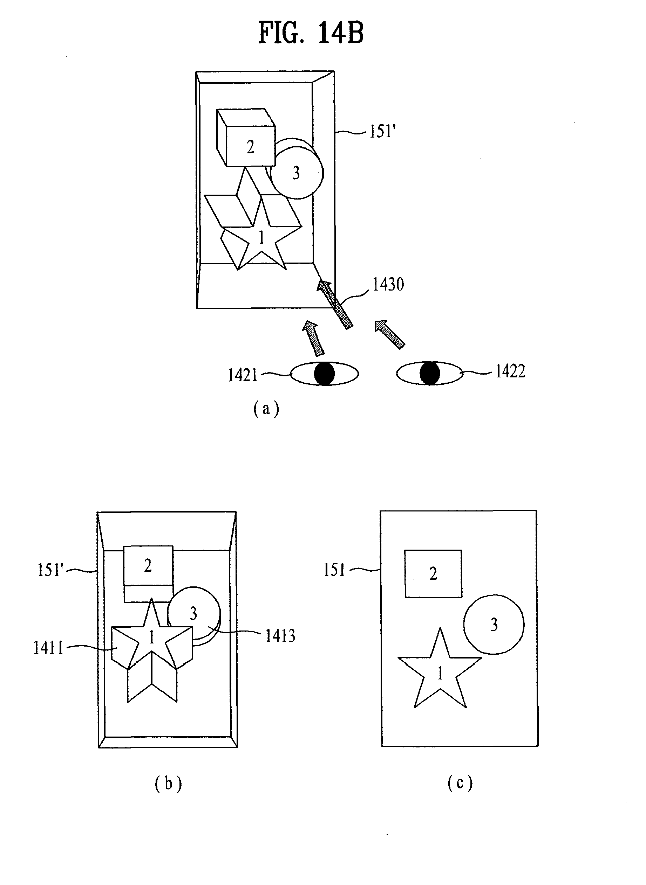

In the following description, a process for changing a form of displaying a display object on the above-mentioned condition is explained in detail with reference to FIG. 14A and FIG. 14B.

FIG. 14A and FIG. 14B are diagrams of display configurations for one example of a process for changing a display form of an object in accordance with a user's view in a mobile terminal according to another embodiment of the present invention.

In FIG. 14A and FIG. 14B, assume that three 3D objects 1411, 1412 and 1413 are arranged in a virtual space 151' on the display unit 151. And, assume that the controller 180 is detecting a user's view using the camera 121.

Referring to FIG. 14A, when three 3D objects are displayed, a user's view lies within the aforementioned first view range (i.e., the range capable of providing a user with a precise stereoscopic 3D image by stereoscopic 3D image implementation) (FIG. 14A (a)). In this case, the controller 180 may be able to create an image resulting from watching the 3D objects in the view of a left eye 1421 of a user as a left eye image (FIG. 14A (b)) and may be able to create an image resulting from watching the 3D objects in the view of a right eye 1422 of a user as a right eye image (FIG. 14A (c)). Thus, if a source image for the stereoscopic 3D image implementation is obtained by the above method, the controller 180 may be able to output the corresponding source image as a stereoscopic 3D image to the display unit having a binocular disparity generating means.

Meanwhile, FIG. 14B (a) shows a case that a user's view exceeds the first view range, i.e., a case that the second condition is met. In this case, the controller 180 does not further create a source image to output a stereoscopic 3D image but displays an image resulting from watching the 3D objects in one of a left eye view, a right eye view and an intermediate view 1430 between the left eye view and the right eye view. In doing so, the binocular disparity generating means of the display unit 151 may be deactivated.

As the second condition is met, while the objects are being outputted as a stereoscopic 2D image, referring to FIG. 14B (b), a considerable portion of the third 3D object 1413 may look as if blocked by the first 3D object 1411 in a certain user's view. In this case, the controller 180 determines that the third condition is met and may be then able to output each of the objects as a planar image (FIG. 14B (c)). In this case, 'a rate at which one object blocks another object' for example of the third condition may include a preset value. Instead of the rate, if a specific part of an object is blocked, the controller 180 may determine that the third condition is met.

Meanwhile, the conditions mentioned in the above description of the embodiments are provided for example, by which the present invention may be non-limited. And, various conditions including an event occurrence, a user command input and the like may apply to the present invention.

According to another example of another embodiment of the present invention, a method including the steps of partitioning a touchscreen area with reference to a touch point and changing a display form of an object included in a prescribed region only in response to a user's view is provided.

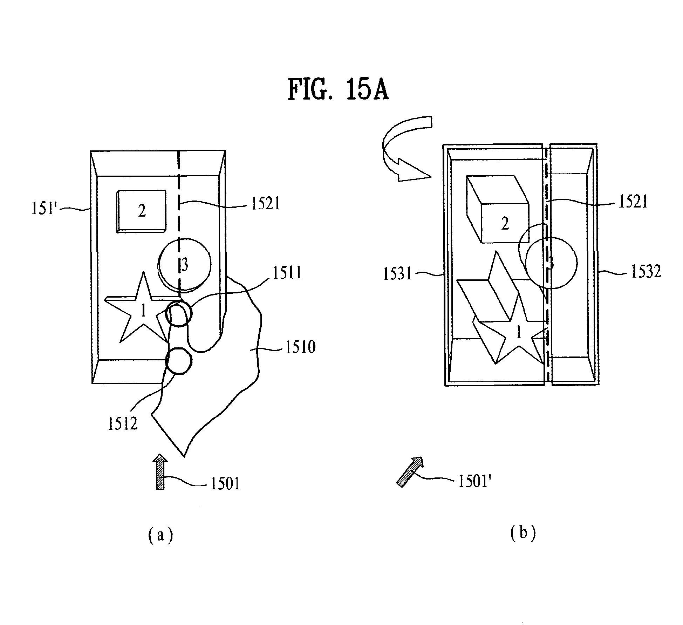

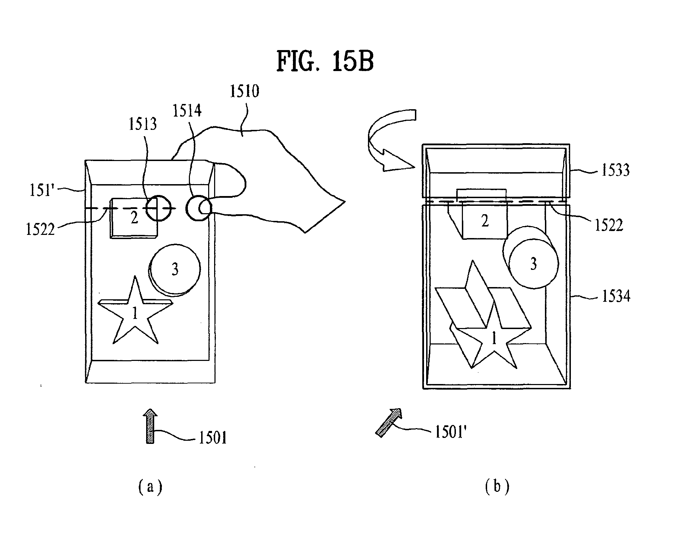

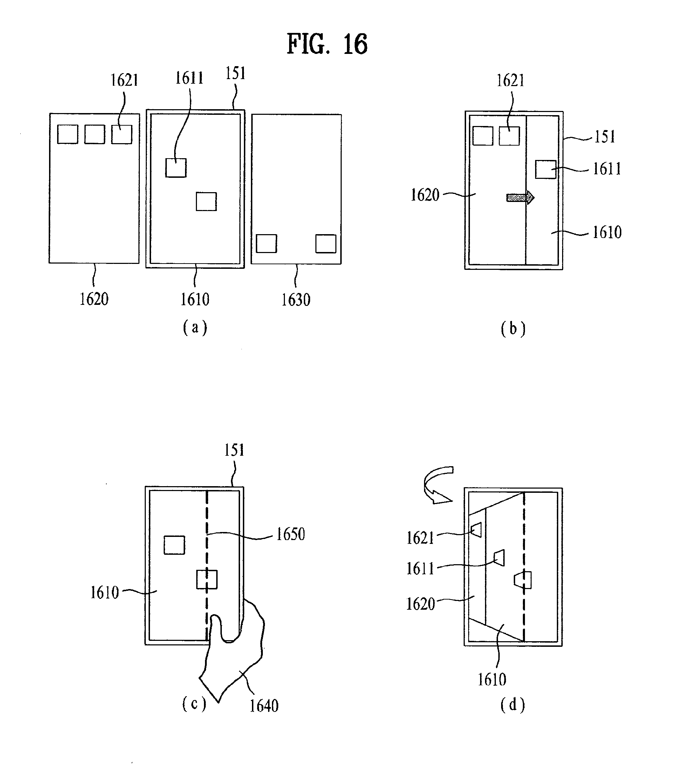

This is described in detail with reference to FIGS. 15A, 15B and 16 as follows.

FIGS. 15A and FIG. 15B are diagrams of display configurations for one example of a method of changing a display form of a prescribed object in accordance with a touch point according to another embodiment of the present invention.

In FIGS. 15A and FIG. 15B, assume that a plurality of objects similar to those shown in FIG. 14A are displayed. And, assume that the controller 180 is detecting a user's view using an image taken via the camera 121.

Referring to FIG. 15A (a), when a user's view 1510 is located at a point of watching the display unit 151 in front, a user applies a touch input to a plurality of points (e.g., 2 points 1511 and 1512) using a hand 1510. In this case, the touch input is simultaneously applied to a plurality of the points for example. Alternatively, the touch input may include a touch input having a size equal to or greater than a predetermined size or a touch & drag input in one direction.

Depending on a touch type, the controller 180 may be able to determine a reference line 1521 for screen partition by selecting one of: 1) when a touch is inputted to a plurality of points, a line of connecting the touch points to each other and/or an extension of the line; 2) in case of a touch & drag input, a trace of the touch & drag and/or an extension of the trace; and 3) in case of a touch input having a pointer contact area equal to or greater than a predetermined area, a longest straight line drawn within a contact plane and/or an extension of the longest straight line. And, the reference line 1521 for the partition may be displayed on the display unit 151 or may not.

While the touch input for the screen partition is maintained, if the user's view is changed, a display form of objects is changed in a larger one of two touchscreen regions, which are generated from partitioning the touchscreen area with reference to the reference line 152 of the partition, in response to the changed user's view and a display form of other objects in the other touchscreen region may be fixed to the state of the touch input. For instance, referring to FIG. 15A(b), assume a case that a user's view 1501' is changed into a right top end from the display unit front by rotating the mobile terminal 100 in a manner that the right top end gets closer to the user. In this case, a display form of the objects located in the left region 1531, which has a size greater than that of the right region 1532, with reference to the reference line 1521 for the partition can be changed in response to the user's view 1501'. And, the objects in the right region 1532 may stay in the state of the touch input.

The above description with reference to FIG. 15A relates to the case that the reference line for the partition is set in portrait direction. The following description with reference to FIG. 15B relates to a case that a reference line for the partition is set in landscape direction.

Referring to FIG. 15B (a), a reference line 1522 for the partition can be set along a straight line that passes through two touch points 1513 and 1514 of a pointer 1510. Referring to FIG. 15B (b), if a user's view 1501' is changed into a right top end by a rotation of the mobile terminal or a user's motion, a display form of objects included in a bottom region 1534 below the reference line 1522 of the partition may be changed in response to the user's view. Moreover, a display form of other objects included in a top region 1533 above the reference line 1522 of the partition may stay in the state of the touch input.

The display form changing method after the region partition, which is described with reference to FIG. 15A and FIG. 15B, may be applicable to a following situation. First of all, a plurality of pages is arranged top to bottom or right to left. Secondly, a currently displayed page is changed into an adjacent page in response to a scroll command in a user interface on which a single page is generally displayed only. For example, this user interface may include one of a background screen (e.g., a home screen) including a plurality of pages in a mobile terminal, a main menu having active icons arranged on a plurality of pages, and the like. This is described in detail with reference to FIG. 16 as follows.

FIG. 16 is a diagram of display configuration for one example of a method of changing a display form of a home screen page in accordance with a touch point according to another embodiment of the present invention.

Referring to FIG. 16 (a), three layers 1610, 1620 and 1630 are arranged adjacent to each other in horizontal direction. At least one object 1611 is arranged on the layer 1610. At least one object 1621 is arranged on the layer 1620. And, at least one object is arranged on the layer 1630. In doing so, assume a situation in which the center layer 1610 is displayed on the touchscreen 151. In this case, each of the layers 1610, 1620 and 1630 may correspond to one page of a home screen or one page of a main menu. Moreover, each of the objects may include a shortcut icon or a widget.

In doing so, if a user attempts to check the layer 1620 located on the left side of the layer 1610 currently displayed on the touchscreen 151, a scroll command may be inputted in general. For example, the scroll command may include a flicking touch input applied in right direction or the like. If the scroll command is inputted, referring to FIG. 16 (b), as the center layer 1610 gradually disappears into a right side, the left layer 1620 may gradually appear from a left side end. Meanwhile, the reference line for the partition may be set, as shown in FIG. 16 (c), by one of the methods described with reference to FIG. 15A and FIG. 15B. Thereafter, while the touch input is inputted, if a user's view is changed, referring to FIG. 16 (d), a portion of the left layer 1620 appears since a left region on the left side of the reference line for the partition inclines in response to the user's view, while a right region on the right side of the reference line for the partition is maintained intact. Moreover, a left layer appearing extent may be changeable in response to the user's view.

By the above-described method, the user is able to check the objects of the layer adjacent to the currently displayed layer with a convenient manipulation without shifting layers.

It will be apparent to those skilled in the art that various modifications and variations can be specified into other form(s) without departing from the spirit or scope of the inventions.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of controlling an image display apparatus, the method comprising the steps of:
displaying a first object on a display unit of the image display apparatus(S710);
partitioning the first object into a first plurality of layers(S710);
determining an inclination of the image display apparatus with respect to a reference(S730'); and
providing a prescribed 3D depth to each layer of the first plurality of layers in response to the determined inclination(S730').

2. The method of claim 1, further comprising the steps of:
determining a location of a user via a camera of the image display apparatus(S730);
and
changing the prescribed 3D depth provided to each layer of the first plurality of layers in response to the determined location of the user(S730).

3. The method of claim 1, further comprising the steps of:
determining a location of a user via a camera of the image display apparatus(S730);
and
rotating each layer of the first plurality of layers in response to the determined location(S730).

4. The method of claim 1, further comprising the steps of:
generating a specific event;
displaying a second object corresponding to the specific event on the display unit;
partitioning the second object into a second plurality of layers; and
providing a prescribed 3D depth to each layer of the second plurality of layers in response to the determined inclination.

5. The method of claim 4, further comprising the step of causing each layer of the first plurality of layers to disappear before the second object is displayed.

6. The method of any one of claims 1 to 5, further comprising the steps of:
determining a presence of a pointer, the proximity of the pointer and a location of the pointer(S740); and
when the determined location of the pointer approaches a specific layer among the first plurality of layers, removing the prescribed 3D depth from the specific layer(S750).

7. The method of any one of claims 1 to 6, wherein the display unit comprises a touchscreen, and
wherein the method further comprises the steps of:
detecting a touch input to a region on the touchscreen corresponding to a specific layer among the first plurality of layers;
causing the remaining layers of the first plurality of layers to disappear from the touchscreen; and
extending the specific layer into a full screen.

8. The method of any one of claims 1 to 7, wherein each of the first plurality of layers includes at least one of an icon, a menu and a content.

9. The method of claim 8, wherein the partitioning step is performed by a reference preset for at least one of the icon, the menu and the content or a user-set reference.

10. The method of any one of claims 1 to 9, wherein the partitioning step is performed in response to one of an inclination change of the image display apparatus, a command input via a user input unit of the image display apparatus and an occurrence of an event corresponding to an external signal.

11. An image display apparatus (100) comprising:
a display unit (151) configured to display a stereoscopic 3D image selectively by including a binocular disparity generating means;
a first sensing module (140) configured to detect a motion of the image display device;
a second sensing module (141-144, 151) configured to detect a presence of a pointer, a proximity of the pointer and a location of the pointer;
a camera (121); and
a controller (180) configured to:
display a first object on the display unit,
partition the displayed first object into a first plurality of layers, and
provide a prescribed 3D depth to each layer of the first plurality of layers in response to one of an inclination of the image display apparatus with respect to a reference determined via the first sensing module, the presence the pointer proximity determined via the second sensing module and a location of a user determined using an image of the user taken via the camera.

12. The image display apparatus of claim 11, wherein the controller is configured to control each layer of the first plurality of layers to be rotated in a manner that a surface of each layer of the plurality of layers faces toward the determined location of the user.

13. The image display apparatus of claim 11 or 12, wherein, when a specific event occurs, the controller is configured to display a second object corresponding to the specific event on the display unit and partition the second object corresponding into a second plurality of layers again.

14. The image display apparatus of claim 11, wherein the controller is configured to provide the prescribed 3D depth to each layer of the first plurality of layers to enable a surface of each layer of the first plurality of layers to become vertical with respect to a ground surface using the inclination determined via the first sensing module.

15. The image display apparatus of any one of claims 11 to 14, wherein, when the location of the pointer determined via the second sensing module approaches a specific layer among a plurality of the layers, the controller is configured to remove the prescribed 3D depth from the specific layer.
